# EUROPEAN PATENT APPLICATION

(11) **EP 4 636 908 A1**
(43) Date of publication of application: **22.10.2025**
(21) Application number: 23917290.1
(22) Date of filing: 18.12.2023
(51) Int. Cl.: H01M 10/615

(54) **BATTERY ASSEMBLY, ELECTRONIC DEVICE, CONTROL METHOD AND CHARGING METHOD**

(30) Priority: 20.01.2023 CN 202310101187
(71) Applicant: Huawei Technologies Co., Ltd., Shenzhen, Guangdong 518129 (CN)
(72) Inventor: LI, Hangfei, Shenzhen, Guangdong 518129 (CN); MA, Xingxing, Shenzhen, Guangdong 518129 (CN); ZHANG, Yang, Shenzhen, Guangdong 518129 (CN); WANG, Zewen, Shenzhen, Guangdong 518129 (CN)
(74) Representative: Gill Jennings & Every LLP
(86) International application number: PCT/CN2023/139446
(87) International publication number: WO 2024/152823

(57) **Abstract**

This application relates to a battery component, an electronic device, a control method, and a charging method. The battery component includes a battery, a heating member, and a temperature measurement apparatus. The heating member covers at least a part of a surface of the battery. The heating member is electrically connected to the battery. The temperature measurement apparatus includes a first temperature measurement apparatus and a second temperature measurement apparatus, the first temperature measurement apparatus is configured to detect a temperature of the heating member, and the second temperature measurement apparatus is configured to detect a temperature of the battery. When the temperature of the battery is lower than a preset temperature, a continuous heating mode is enabled. When a temperature difference between the heating member and the battery is greater than a preset temperature difference, a pulse heating mode is enabled. The heating member is disposed to directly heat the battery, so that heating efficiency of the battery is improved. In addition, in a discharging process in which the battery itself also generates heat, heating the battery by the heating member helps improve a discharge capability of the battery. When the battery is to be charged, the battery may be heated to the preset temperature before charging, to reduce damage to the battery caused by charging in a low-temperature environment.

## Description

The present invention claims priority to Chinese Patent Application No. 202310101187.3, filed with the China National Intellectual Property Administration on January 20, 2023, and entitled "BATTERY COMPONENT, ELECTRONIC DEVICE, CONTROL METHOD, AND CHARGING METHOD", which is incorporated herein by reference in its entirety.

### TECHNICAL FIELD

The present invention relates to the field of battery technologies, and in particular, to a battery component, an electronic device, a control method, and a charging method.

### BACKGROUND

With development of technologies, wearable electronic devices such as smart watches are increasingly widely used. When an electronic device like a smart watch is in a low-temperature environment, to prevent a battery of the electronic device from failing to run normally in the low-temperature environment, software control is usually used to increase power consumption of another electronic component, so that the electronic component generates heat, to increase a temperature of the entire device, so as to increase a temperature of the battery. However, in this manner, temperature rise efficiency of the battery is low, resulting in limited application scenarios.

### SUMMARY

This application provides a battery component, an electronic device, a control method, and a charging method, to improve temperature rise efficiency of a battery.

This application provides a battery component, where
the battery component includes:
a battery;
a heating member, where the heating member covers at least a part of the battery, and the heating member is electrically connected to the battery; and
a temperature measurement apparatus, where the temperature measurement apparatus includes a first temperature measurement apparatus and a second temperature measurement apparatus, the first temperature measurement apparatus is configured to detect a temperature of the heating member, and the second temperature measurement apparatus is configured to detect a temperature of the battery; and
when the second temperature measurement apparatus detects that the temperature of the battery is lower than a preset temperature, a continuous heating mode is enabled, and when the first temperature measurement apparatus and the second temperature measurement apparatus detect that a temperature difference between the heating member and the battery exceeds a preset temperature difference, the heating member enables a pulse heating mode.

The heating member is disposed to directly heat the battery. This helps increase the temperature of the battery, and improves heating efficiency of the battery, so that the battery can reach an appropriate temperature in a short time in a low-temperature environment. In addition, the battery can supply power to the heating member, and in a discharging process of the battery in which the battery itself also generates specific heat due to a specific internal resistance of the battery, heating the battery by the heating member helps reduce the internal resistance of the battery, and improve an internal electrochemical substance activity. In this way, it can be ensured that the battery can be discharged at a high current in the low-temperature environment. This better meets an actual requirement.

In a possible implementation, the heating member includes a substrate and a heating coil, and the heating coil is disposed on the substrate.

Such a heating member has advantages of a simple structure and easy processing.

In a possible implementation, the heating coil includes at least one bent portion.

In this design, a coverage area of the heating coil on a surface of the substrate is increased. This can improve heating efficiency of the heating member, and helps make temperatures at all positions of the heating member even.

In a possible implementation, a material of the substrate is polyimide, and a material of the heating coil is copper-nickel alloy.

The copper-nickel alloy has a feature of a large impedance, and better meets an actual use requirement.

In a possible implementation, the heating member is a flexible circuit board.

Such a design has a simple structure, and is easy to be processed.

In a possible implementation, the battery component includes a controller, and the controller is configured to: receive a detection result of the temperature measurement apparatus, and control the heating member based on the detection result of the temperature measurement apparatus.

Such a design can improve precision of controlling the heating member.

In a possible implementation, the battery component further includes a comparator, and the comparator is configured to: receive a detection result of the first temperature measurement apparatus, and compare the detection result with a preset value.

When the temperature of the heating member exceeds the preset value, the comparator may output a corresponding signal in time to turn off the heating member. In comparison with a manner in which the heating member is turned off by utilizing a software program when the temperature of the heating member exceeds the preset value, because there is a possibility that an error occurs in the software program during running, in the manner of using the comparator provided in this embodiment of this application, the heating member may be controlled by utilizing hardware. This is relatively stable, has relatively high security, and better meets an actual use requirement.

In a possible implementation, the comparator has a hysteresis range, the first temperature measurement apparatus includes at least a first measurement apparatus and a second measurement apparatus, the comparator is configured to receive a detection result of the first measurement apparatus, and the controller is configured to receive a detection result of the second measurement apparatus.

When a preset value of the comparator is a preset point, a voltage signal of the first temperature measurement apparatus may fluctuate around the preset point. As a result, the heating member is repeatedly started and stopped, that is, a heating hiccup phenomenon is likely to occur. The comparator has a hysteresis range, so that a possibility of occurrence of a heating hiccup phenomenon can be reduced. When the comparator 5 has the hysteresis range, the voltage of the first measurement apparatus is limited within a specific range due to impact of the hysteresis circuit. Consequently, detection precision of the first measurement apparatus is declined, and control precision of the controller for the heating member is compromised. Therefore, in the solution in which the comparator provided in this embodiment of this application has the hysteresis range, the first temperature measurement apparatus includes the first measurement apparatus and the second measurement apparatus. This is used to improve the control precision of the controller for the heating member.

In a possible implementation, the battery component further includes an AND gate and a switch component, and the AND gate is configured to: receive signals output by the controller and the comparator, and control the switch component to turn on or turn off the heating member.

Such a design can improve stability of controlling the heating member by the battery component, to help reduce safety risks.

In a possible implementation, the battery has a protection board, and the second temperature measurement apparatus is disposed on the protection board.

The second temperature measurement apparatus is disposed on the protection board, to help reduce impact of the heating member on a detection result.

In a possible implementation, the battery component further includes an isolation layer, and the isolation layer is located on a side that is of the heating member and that is away from the battery.

The isolation layer can reduce external interference to the battery.

In a possible implementation, a material of the isolation layer is a nanocrystalline material.

The nanocrystalline material can reduce external interference to the battery. When the battery is charged in a wireless charging manner, interference to wireless charging can be reduced, and charging efficiency can be improved.

In a possible implementation, the battery component includes at least two heating members, and the heating members are located on different surfaces of the battery.

A plurality of heating members are disposed, so that different positions on the battery can be heated simultaneously. When the battery component includes two heating members, the two heating members may be respectively located on two opposite sides of the battery. When the battery component has more than two heating members, positions of the heating members may be distributed as required, so that all positions on the battery can be evenly heated when the heating members heat the battery, to improve heating efficiency.

A second aspect of this application provides an electronic device, where
the electronic device includes:
a battery;
a heating member, where the heating member covers at least a part of the battery, and the heating member is electrically connected to the battery; and
a temperature measurement apparatus, where the temperature measurement apparatus includes a first temperature measurement apparatus and a second temperature measurement apparatus, the first temperature measurement apparatus is configured to detect a temperature of the heating member, and the second temperature measurement apparatus is configured to detect a temperature of the battery; and
a controller, where the controller is configured to receive at least a detection result of the second measurement apparatus;
a comparator, where the comparator is configured to: receive a detection result of the first temperature measurement apparatus, and compare the detection result with a preset value;
a switch component, where the switch component is configured to control the heating member to be turned on or turned off; and
an AND gate, where the AND gate is configured to: receive detection results of the controller and the comparator, and control the switch component, where
the controller is configured to output a control signal based on the detection result of the second measurement apparatus, the comparator is configured to output a control signal based on the detection result of the first measurement apparatus, and when both the controller and the comparator output signals for turning on the switch component, the AND gate is configured to control the switch component to be turned on, or when either of the controller and the comparator outputs a signal for turning off the switch component, the AND gate is configured to control the switch component to be turned off.

The comparator can protect the battery by utilizing hardware. When the temperature of the heating member is excessively high, the heating member can be turned off by utilizing a hardware circuit. This helps improve safety.

In a possible implementation, the heating member is a flexible circuit board.

Such a design has a simple structure, and is easy to be processed.

In a possible implementation, the comparator has a hysteresis range, the first temperature measurement apparatus includes at least a first measurement apparatus and a second measurement apparatus, the comparator is configured to receive a detection result of the first measurement apparatus, and the controller is configured to receive a detection result of the second measurement apparatus.

When a preset value of the comparator is a preset point, a voltage signal of the first temperature measurement apparatus may fluctuate around the preset point. As a result, the heating member is repeatedly started and stopped, that is, a heating hiccup phenomenon is likely to occur. The comparator has a hysteresis range, so that a possibility of occurrence of a heating hiccup phenomenon can be reduced. When the comparator 5 has the hysteresis range, the voltage of the first measurement apparatus is limited within a specific range due to impact of the hysteresis circuit. Consequently, detection precision of the first measurement apparatus is declined, and control precision of the controller for the heating member is compromised. Therefore, in the solution in which the comparator provided in this embodiment of this application has the hysteresis range, the first temperature measurement apparatus includes the first measurement apparatus and the second measurement apparatus. This is used to improve control precision of the controller for the heating member.

In a possible implementation, the battery component includes at least two heating members, and the heating members are located on different surfaces of the battery.

A plurality of heating members are disposed, so that different positions on the battery can be heated simultaneously. When the battery component includes two heating members, the two heating members may be respectively located on two opposite sides of the battery. When the battery component has more than two heating members, positions of the heating members may be distributed as required, so that all positions on the battery can be evenly heated when the heating members heat the battery, to improve heating efficiency.

In a possible implementation, the electronic device includes a third temperature measurement apparatus, and the third temperature measurement apparatus is disposed on a housing of the electronic device and is configured to detect a temperature of the housing.

The third temperature measurement apparatus is disposed, so that the controller 3 can obtain the temperature of the housing of the electronic device, and when the temperature exceeds a temperature range of a human comfort range, the battery component is controlled to stop heating. In this manner, a possibility in which a temperature of the electronic device is excessively high due to heating the battery, compromising comfort of a user can be reduced, and dangers caused by the excessively high temperature can also be reduced. This helps improve safety of the electronic device, and better meets an actual use requirement.

A third aspect of this application provides a control method for an electronic device, where the electronic device includes a controller, a battery, a heating member, a first temperature measurement apparatus, a second temperature measurement apparatus, a comparator, and an AND gate; and the control method includes:

The controller detects temperature information of the battery through the second temperature measurement apparatus; and when the battery needs to be heated, the controller outputs a signal for turning on the heating member, or when the battery does not need to be heated, the controller outputs a signal for turning off the heating member;
the comparator detects temperature information of the heating member through the first temperature measurement apparatus; and when a temperature of the heating member is higher than a preset value, the comparator outputs a signal for turning off the heating member, or when the temperature of the heating member is not higher than the preset value, the comparator outputs a signal for turning on the heating member; and
the AND gate receives signals output by the controller and the comparator, and when both the controller and the comparator output signals for turning on the heating member, the AND gate controls the heating member to be turned on, or when either of the controller and the comparator outputs a signal for turning off the heating member, the AND gate controls the heating member to be turned off.

The comparator can protect the battery by utilizing hardware. When the temperature of the heating member is excessively high, the heating member can be turned off by utilizing a hardware circuit. This helps improve safety.

In a possible implementation, the control method includes:

The controller detects a status of the battery and determines whether the battery needs to be heated;
when the battery does not need to be heated, the status of the battery is continued to detect; or
when the battery needs to be heated, the heating member enables a continuous heating mode, and determines whether a temperature of the battery is higher than a preset temperature;
when the temperature of the battery is higher than the preset temperature, heating is stopped; or
when the temperature of the battery is not higher than the preset temperature, whether the continuous heating mode times out is determined;
when the continuous heating mode times out, heating is stopped; or
when the continuous heating mode does not time out, whether a temperature difference between the heating member and the battery exceeds a preset temperature difference is determined;
when the temperature difference between the heating member and the battery does not exceed the preset temperature difference, the continuous heating mode is continued; or
when the temperature difference between the heating member and the battery exceeds the preset temperature difference, a pulse heating mode is enabled, and whether the pulse heating mode times out is determined;
when the pulse heating mode times out, heating is stopped; or
when the pulse heating mode does not time out, whether the temperature of the battery is higher than the preset temperature is determined; and
when the temperature of the battery is higher than the preset temperature, heating is stopped; or
when the temperature of the battery is not higher than the preset temperature, whether pulse heating times out is re-determined.

In this manner, the heating member can be controlled to enable a proper heating mode to heat the battery, to help improve a discharge capability of the battery.

In a possible implementation, the control method further includes:

The controller detects whether the battery needs to be charged.

In this design, whether the battery needs to be charged can be detected.

A fourth aspect of this application provides a charging method for an electronic device, where
the electronic device includes a controller, a battery, a heating member, and a second temperature measurement apparatus; and the charging method includes:

The controller detects a charging status of the electronic device;
when the electronic device is in a charging state, the controller detects, through the second temperature measurement apparatus, whether a temperature of the battery is lower than a preset temperature;
when the temperature of the battery is lower than the preset temperature, the controller detects whether a state of charge of the battery meets a first condition; and
when the state of charge of the battery meets the first condition, the heating member is controlled to heat the battery, and after the controller determines that the temperature of the battery reaches the preset temperature, the controller controls the electronic device to be charged.

In this design, the battery in the low-temperature environment can be heated before charging, so that damage caused by charging in the low-temperature environment to the battery can be reduced. This helps prolong a service life of the battery.

In a possible implementation, when the electronic device is in a charging state, the step of detecting, by the controller through the second temperature measurement apparatus, whether the temperature of the battery is lower than the preset temperature includes:
When the temperature of the battery is not lower than the preset temperature, the controller controls the electronic device to be charged.

When the battery does not need to be heated, the battery may be directly charged.

In a possible implementation, when the temperature of the battery is lower than the preset temperature, the step of detecting, by the controller, whether the state of charge of the battery meets the first condition includes:
When the state of charge of the battery does not meet the first condition, the electronic device sends a low-temperature power-shortage prompt.

In this design, a user can be indicated in time that current charging may cause damage to the battery.

This application relates to a battery component, an electronic device, a control method, and a charging method. The battery component includes a battery, a heating member, and a temperature measurement apparatus. The heating member covers at least a part of a surface of the battery. The heating member is electrically connected to the battery. The temperature measurement apparatus includes a first temperature measurement apparatus and a second temperature measurement apparatus, the first temperature measurement apparatus is configured to detect a temperature of the heating member, and the second temperature measurement apparatus is configured to detect a temperature of the battery. When the temperature of the battery is lower than a preset temperature, a continuous heating mode is enabled. When a temperature difference between the heating member and the battery is greater than a preset temperature difference, a pulse heating mode is enabled. The heating member is disposed to directly heat the battery, so that heating efficiency of the battery is improved. In addition, in a discharging process in which the battery itself also generates heat, heating the battery by the heating member helps improve a discharge capability of the battery. When the battery is to be charged, the battery may be heated to the preset temperature before charging, to reduce damage to the battery caused by charging in a low-temperature environment.

It should be understood that the foregoing general descriptions and the following detailed descriptions are merely used as an example, and should not limit this application.

### BRIEF DESCRIPTION OF DRAWINGS

FIG. 1 is a diagram of a battery component according to an embodiment of this application;
FIG. 2 is a framework diagram of a battery component according to this application;
FIG. 3 is a diagram of a structure of a heating member according to an embodiment of this application;
FIG. 4 is a side view of a battery component according to this application;
FIG. 5 is an efficiency test diagram of a battery component with a nanocrystalline isolation layer and a battery component without the nanocrystalline isolation layer according to this application;
FIG. 6 is a circuit topology diagram of a battery component according to this application;
FIG. 7 is a diagram of a control method for a battery component according to an embodiment of this application; and
FIG. 8 is a diagram of a charging method for a battery component according to this application.

### Reference numerals:

1: battery; 11: isolation layer; 2: heating member, 21: flexible circuit board; 22: snake-shaped circuit; 3: controller; 4: temperature measurement apparatus, 41: first temperature measurement apparatus; 411: first measurement apparatus; 412: second measurement apparatus; 42: second temperature measurement apparatus; 5: comparator; 6: AND gate; 7: switch component; 8: standard resistor.

The accompanying drawings herein are incorporated into this specification and constitute a part of this specification, to show embodiments in accordance with this application, and are used, together with this specification, to explain the principle of this application.

### DESCRIPTION OF EMBODIMENTS

For better understanding of technical solutions of this specification, the following describes embodiments of this application in detail with reference to accompanying drawings.

With development of technologies, electronic devices such as smart watches, mobile phones, and tablet computers are increasingly widely used. A battery of an electronic device is usually a lithium-ion battery. The lithium-ion battery is widely used in mobile electronic devices because of features such as a long service life, a high energy density, and a high charging and discharge capability. However, due to a chemical composition of the lithium-ion battery, performance of the lithium-ion battery deteriorates in a low-temperature environment. An activity of lithium ions in the battery decrease, resulting in decrease in a capacity and a charging and discharge capability of the battery. In addition, a reaction capability of a contact surface between the lithium ions and an electrolyte decreases, resulting in increase in an internal resistance of the battery. When an electronic device with a lithium battery is used in an outdoor environment or the like, the electronic device may encounter a low-temperature environment. As shown in the figure, as a temperature decreases, a direct current internal resistance of the battery increases sharply. When an operating current of a component in the electronic device is high, because the internal resistance of the battery increases, an output voltage at an outlet of the battery is directly lower than a power-down voltage when the battery is loaded heavily. As a result, the electronic device cannot operate normally, and even when the current further increases, the voltage at the outlet of the battery is lower than operating thresholds of some key components, resulting in abnormal powered-off of the electronic device. This is also a reason why many electronic devices are powered off abnormally in winter. Especially when a power of a load is constant, a problem that a stable voltage cannot be provided for an external system due to increase in the internal resistance of the battery is more serious. This is mainly because when the power is constant, if the output voltage of the battery is excessively low, the battery is required to output a high operating current, however, the increased operating current further exacerbates a voltage drop caused by the internal resistance of the battery, creating a "vicious cycle".

A lithium plating phenomenon is likely to occur when the lithium-ion battery is charged in the low-temperature environment. To be specific, lithium metal may be precipitated on an anode surface when the lithium ion is charged in a low-temperature state, and a lithium plating process is irreversible, where the low temperature state usually refers to an environment in which a temperature is lower than 0°C. The lithium plating phenomenon causes increase in the internal resistance of the battery and decrease in the capacity of the battery. In a serious case, dendrite growth in the lithium plating process even causes a battery separator to be pierced, resulting in a short circuit of the battery. If the battery is repeatedly charged in a low temperature state, the battery will be damaged, and battery safety is lowered. Therefore, generally, a charging temperature of the electronic device with the lithium battery is required to be higher than 0°C.

In a related technology, a high-load high-power running mode is usually used to improve power consumption of an entire device. For example, software is used to implement a large amount of operation processing or memory transfer, to implement high power consumption and heat generation of the entire device, so as to improve a temperature of the entire device and a temperature of a battery. However, in this manner, a circuit board needs to be disposed around the battery, and an electronic component is disposed on the circuit board, or the battery and the electronic component are located on two opposite sides of the circuit board. Heat generated by the electronic component is transferred to the battery through a medium like the circuit board. However, the electronic component is not in direct contact with the battery, and consequently, heat transfer efficiency between the two is low, and temperature rise efficiency of the battery is low. In addition, because the electronic component needs to run with a high load in a temperature rise process, an aging process of the electronic component is greatly accelerated, and a service life of the entire device is shortened.

In view of this, embodiments of this application provide a battery component, to improve temperature rise efficiency of a battery.

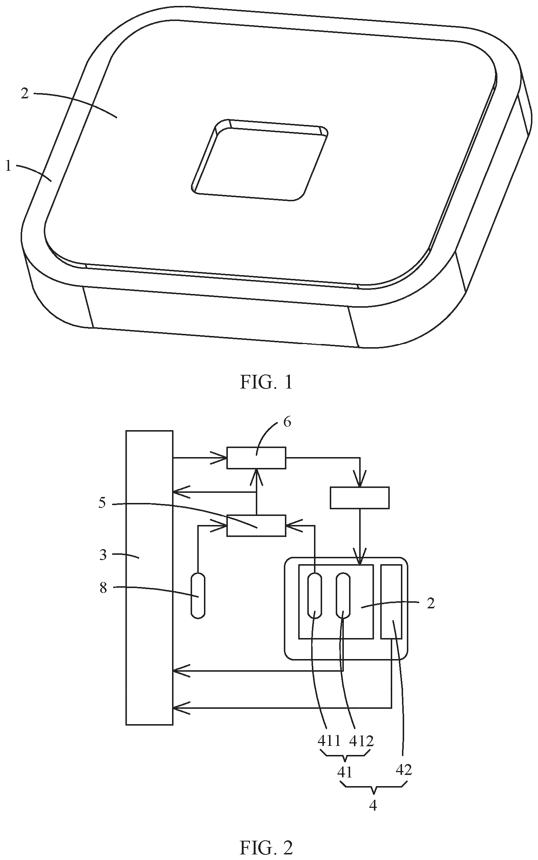

As shown in FIG. 1 and FIG. 2, an embodiment of this application provides a battery component. The battery component includes a battery 1, a heating member 2, and a temperature measurement apparatus 4. The heating member 2 covers at least a part of a surface of the battery 1, and the heating member 2 is electrically connected to the battery 1, so that the battery 1 can supply power to the heating member 2. The temperature measurement apparatus 4 can detect at least a temperature of the battery 1. When the battery 1 needs to be heated, the heating member 2 can be turned on. When the battery 1 does not need to be heated, the heating member 2 is turned off. During use, a corresponding standard value may be preset, and information detected by the temperature detection component 4 is compared with the standard value, to determine whether the battery 1 needs to be heated. The measurement apparatus 4 may be a thermocouple sensor, a thermistor, an analog integrated temperature sensor, a digital output sensor, or the like. Different types of measurement apparatuses 4 can output corresponding types of signals. The types of the output signals include but are not limited to a voltage signal, a current signal, a digital signal, an analog signal, and the like.

Compared with a solution in which electronic components are stacked around the battery 1 and the electronic components run and emit heat at a high power to heat the battery 1, in a solution provided in this embodiment of this application, the heating member 2 is disposed to heat directly the battery 1. This helps increase the temperature of the battery 1, and improves heating efficiency of the battery 1, so that the battery 1 can reach an appropriate temperature in a short time in a low-temperature environment, to facilitate charging or discharging. In addition, the battery 1 can supply power to the heating member 2, and in a discharging process of the battery 1 in which the battery 1 itself also generates specific heat due to a specific internal resistance of the battery 1, heating the battery 1 by the heating member 2 helps reduce the internal resistance of the battery 1, and improve an internal electrochemical substance activity. In this way, it can be ensured that the battery 1 can be discharged at a high current in the low-temperature environment. When the battery 1 is in the low-temperature environment and needs to be charged, the battery 1 may be heated by the heating member 2, to increase the temperature of the battery 1 before charging, so as to reduce a possibility of lithium plating in the battery 1. This better meets an actual requirement.

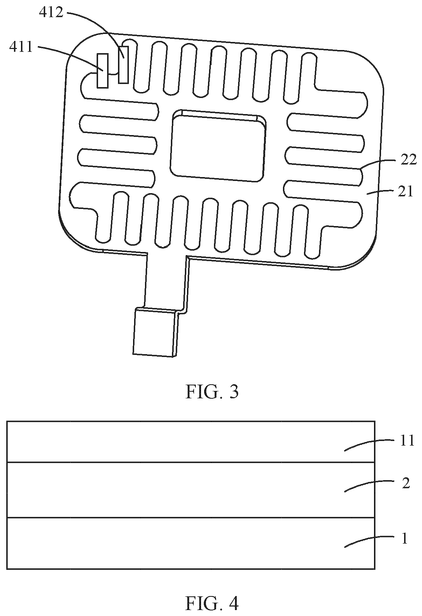

As shown in FIG. 3, in a possible implementation, the heating member 2 may include a substrate, and a heating coil is disposed on the substrate. Such the heating member 2 has advantages of a simple structure and ease of processing. The heating coil may include at least one bent portion, so that a coverage area of the heating coil on a surface of the substrate is increased. This can improve heating efficiency of the heating member 2, and helps make temperatures at all positions of the heating member 2 even. A snake-shaped circuit 22 may be printed on the substrate, and the snake-shaped circuit 22 may be used as the heating coil. The snake-shaped circuit 22 can increase an internal resistance, to ensure that a resistance value is within a specific range. The internal resistance is increased, so that a current of the heating member 2 during operating can be lowered. Generally, the heating member 2 is powered by the battery 1, so that a possibility that a discharge capability of the battery 1 is inadequate due to an excessively high current of the heating member 2 can be reduced. Because the internal resistance of the battery 1 is fixed, when the current of the battery 1 is excessively high, an output voltage of the battery 1 is excessively low, and the electronic device is easily restarted in a use process. In this way, an internal resistance of the heating member 2 may be increased to reduce the current of the heating member 2, so as to reduce an output current of the battery 1. The resistance value is within a specific range, so that an overall temperature rise time can be controlled.

In a possible implementation, a material of the snake-shaped circuit 22 may be a copper-nickel alloy with a thickness of approximate 50 micrometers and a resistivity of approximate 1.2 × 10⁻⁷Ω/m. The copper-nickel alloy has a feature of a large impedance. A substrate of a flexible circuit board 21 may be made of a polyimide (PI) material, and the polyimide has a feature of a high temperature resistance. A substrate thickness of the flexible circuit board 21 is approximately 300 micrometers. An adhesive like a thermally conductive adhesive may be disposed on a side that is of the substrate and on which the snake-shaped circuit 22 is not disposed, so that the flexible circuit board 21 is closely attached to the battery 1.

In a possible implementation, the substrate of the heating member 2 has a through hole, and an identification code like a QR code or a bar code of the battery 1 is located within a range of the through hole. In other words, the identification code may be exposed through the through hole, to help related information of the battery 1 to be read through an operation like code scanning performed on the battery 1 in a processing or use process, so as to learn of information and a parameter corresponding to the battery 1. When the heating coil is disposed, the through hole is avoided, to reduce blocking on the identification code, and further help the substrate support the heating coil.

In a possible implementation, the heating member 2 may be the flexible circuit board 21 (flexible printed circuit, FPC), and the heating member 2 may be obtained by printing a heating coil on a surface of the flexible circuit board 21. Such a design has a simple structure, and is easy to be processed.

As shown in FIG. 2, in a possible implementation, the battery component may include a controller 3. The controller 3 is configured to: receive a detection result of the temperature measurement apparatus 4, and control the heating member 2 based on the detection result, to improve control precision for the heating member 2. In practice, the controller 3 may be separately disposed, or may be a processor of an electronic device having a battery component, or the like. The temperature measurement apparatus 4 includes a first temperature measurement apparatus 41 and a second temperature measurement apparatus 42. The first temperature measurement apparatus 41 is configured to detect a temperature of the heating member 2, and the second temperature measurement apparatus 42 is configured to detect the temperature of the battery 1. The first temperature measurement apparatus 41 may be disposed on a surface of the heating member 2, and specifically, may be disposed on the heating coil of the heating member 2. The controller 3 is configured to: receive detection results of the first temperature measurement apparatus 41 and the second temperature measurement apparatus 42, and control the heating member 2 based on the results.

In a possible implementation, the controller 3 may be a microcontroller unit (microcontroller unit, MCU).

The first temperature measurement apparatus 41 and the second temperature measurement apparatus 42 are disposed, so that the temperature of the battery 1 can be detected, and the temperature of the heating member 2 can also be detected. In this way, a possibility that the battery 1 does not reach a preset temperature but the temperature of the heating member 2 continuously increases and exceeds a preset range of the heating member 2 can be reduced. This helps reduce safety risks and better meets an actual use requirement.

In a possible implementation, the second temperature measurement apparatus 42 is disposed on a protection board of the battery 1. The protection board may be configured to perform overcurrent protection and temperature protection on the battery 1.

The protection board is usually disposed on a side wall of the battery 1. The second temperature measurement apparatus 42 is disposed on the protection board of the battery 1, so that the second temperature measurement apparatus 42 can detect a current temperature of the battery 1.

Generally, the battery 1 is approximately of a cuboid structure, and two surfaces disposed opposite to each other with relatively large areas are respectively a top surface and a bottom surface. The heating member 2 is usually disposed on the top surface and/or the bottom surface, to increase a contact area between the heating member 2 and the battery 1, so as to help improve heating efficiency. A remaining surface is a side surface, and the protection board is disposed on the side surface of the battery 1. Therefore, the second temperature measurement apparatus 42 is disposed on the protection board, to help reduce impact of the heating member 2 on a detection result.

As shown in FIG. 4, in a possible implementation, the battery component further includes an isolation layer 11. The isolation layer 11 is located on a side that is of the heating member 2 and that is away from the battery 1, and is configured to perform magnetic shielding.

A material of the isolation layer 11 may be a nanocrystalline material, and the isolation layer 11 can reduce external interference to the battery 1. When the battery 1 is charged in a wireless charging manner, interference to wireless charging can be reduced, and charging efficiency can be improved.

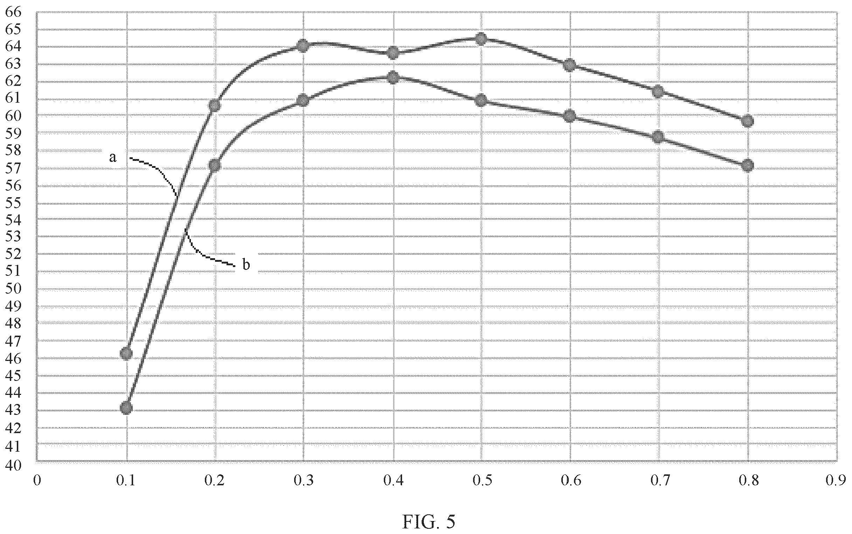

FIG. 5 is an efficiency test diagram of a battery component with a nanocrystalline isolation layer 11 and a battery component without the nanocrystalline isolation layer 11. A horizontal coordinate is a current in a unit of ampere, and a vertical coordinate is charging efficiency. In the figure, a curve a indicates the battery component with the nanocrystalline isolation layer 11, and a curve b indicates the battery component without the nanocrystalline isolation layer 11. It can be learned from the figure that, when currents are the same, charging efficiency of the battery component with the nanocrystalline isolation layer 11 is significantly better than that of the battery component without the nanocrystalline isolation layer 11.

In a possible implementation, the controller 3 may use a microcontroller unit, and the temperature measurement apparatus 4 may use a thermistor. The thermistor has features of high sensitivity, a large resistance temperature coefficient, a wide operating temperature range, and the like. In addition, the thermistor has a small size, and better meets an actual use requirement. During use, due to impact of the temperature, a resistance value of the thermistor varies with the temperature. When the resistance value of the thermistor changes, a voltage of the thermistor also changes. Therefore, a voltage of the thermistor may indicate corresponding temperature information. The thermistor may be a positive temperature coefficient thermistor or a negative temperature coefficient thermistor. In the following temperature measurement apparatus 4, a negative temperature coefficient thermistor is used as an example. To be specific, a higher temperature indicates a smaller resistance of the thermistor, and a lower temperature indicates a larger resistance of the thermistor. A voltage signal of the negative temperature coefficient thermistor can indicate a temperature of the corresponding heating member 2 or a temperature of the corresponding battery 1. Similarly, a positive temperature coefficient thermistor may also be used, but when the temperature changes, a resistance change of the positive temperature coefficient thermistor is opposite to that of the negative temperature coefficient thermistor. When the measurement apparatus 4 uses a thermistor, a voltage signal of the thermistor is the detection result of the measurement apparatus 4.

As shown in FIG. 2, in a possible implementation, the battery component includes a comparator 5 and a switch component 7. The switch component 7 is configured to control the heating member 2 to be turned on and turned off. The comparator 5 may be configured to receive a voltage signal of the first temperature measurement apparatus 41. After receiving the voltage signal of the first temperature measurement apparatus 41, the comparator 5 compares the voltage signal of the first temperature measurement apparatus 41 with a preset value, to determine whether a current temperature of the heating member 2 is higher than a preset temperature. When the comparator 5 detects that the voltage signal of the first temperature measurement apparatus 41 exceeds the preset value, that is, the temperature of the heating member 2 is higher than the preset temperature, the comparator 5 can output a corresponding signal to the switch component 7, and the switch component 7 is turned off after receiving the corresponding signal, to turn off the heating member 2. When the comparator 5 detects that the voltage signal of the first temperature measurement apparatus 41 does not exceed the preset value, that is, the temperature of the heating member 2 is not higher than the preset temperature, the comparator 5 can output a corresponding signal to the switch component 7, and the switch component 7 is turned on after receiving the corresponding signal, to turn on the heating member 2.

In a possible implementation, when the voltage signal of the first temperature measurement apparatus 41 exceeds the preset value, the comparator 5 outputs a low level; or when the voltage signal of the first temperature measurement apparatus 41 does not exceed the preset value, the comparator 5 outputs a high level.

When the temperature of the heating member 2 exceeds the preset value, the comparator 5 may output a corresponding signal in time to turn off the heating member 2. In comparison with a manner in which the heating member 2 is turned off by utilizing a software program when the temperature of the heating member 2 exceeds the preset value, because there is a possibility that an error occurs in the software program during running, in the manner of using the comparator 5 provided in this embodiment of this application, the heating member 2 may be controlled by utilizing hardware. This is relatively stable, has relatively high security, and better meets an actual use requirement.

The comparator 5 and the thermistor can be used to form a hard protection circuit. When the temperature of the heating member 2 exceeds the preset temperature, the comparator 5 can output a signal used to turn off the heating member 2. The hard protection circuit controls the heating member 2 by utilizing hardware, and the heating member 2 may be controlled without a software program, so that a reaction is more timely and stable during use. When the hard protection circuit detects, based on the voltage signal, that the temperature of the battery 1 does not exceed the preset temperature, heating logic runs. When the hard protection circuit reaches a protection threshold, that is, the hard protection circuit detects, based on the voltage signal, that the temperature of the battery 1 exceeds the preset temperature, hard protection is immediately enabled, and heating is stopped. Safety of the battery component during heating can be further improved by utilizing the hard protection circuit.

The comparator 5 can only perform control based on the preset value, that is, output a corresponding turn-off signal when the temperature of the heating member 2 indicated by the signal received by the comparator 5 is higher than the preset temperature, or output a corresponding turn-on signal when the temperature of the heating member 2 indicated by the signal received by the comparator 5 is not higher than the preset temperature, and cannot control the heating member 2 based on something other than the preset value. For example, when the temperature of the heating member 2 indicated by the signal received by the comparator 5 is not higher than the preset temperature, but the heating member 2 needs to be turned off, the heating member 2 cannot be controlled by utilizing only the comparator 5. Therefore, in the battery component provided in this embodiment of this application, the heating member 2 may be jointly controlled by utilizing the controller 3 and the comparator 5. When the comparator 5 cannot output the corresponding control signal, the controller 3 is utilized to perform controlling. This helps improve control precision.

In a possible implementation, the comparator 5 has a hysteresis range, so that the preset value set by the comparator 5 can change from a preset point to a preset range. A manner of forming the hysteresis range includes but is not limited to connecting a fixed resistor and the comparator 5 in parallel. The fixed resistor is used as a hysteresis resistor of the comparator 5, and a range of the comparator 5 can be adjusted by adjusting a value of the fixed resistor.

In a possible implementation, a temperature corresponding to the preset value of the comparator 5 is 55°C. When the hysteresis range is not set, and the temperature of the heating member 2 exceeds 55°C, the comparator 5 outputs a control signal to the switch component 7 based on a received voltage signal, and the switch component 7 turns off the heating member 2. Because the heating member 2 is turned off, the temperature of the heating member 2 decreases. When the temperature of the heating member 2 is lower than 55°C, the comparator 5 outputs a control signal to the switch component 7 based on a received voltage signal, and the switch component 7 turns on the heating member 2. When the temperature of the heating member 2 fluctuates around 55°C, the heating member 2 is repeatedly started and stopped. This consumes a large amount of power, and compromises service lives of the heating member 2 and other components, causing safety risks. The hysteresis range is set, so that the temperature corresponding to the preset value of the comparator 5 may be extended from a temperature point to a temperature range. For example, the temperature corresponding to the preset value of the comparator 5 may be changed from 55°C to 53°C to 57°C by utilizing the hysteresis circuit. When the temperature of the heating member 2 exceeds 57°C, the comparator 5 outputs a control signal to the switch component 7 based on a received voltage signal, and the switch component 7 turns off the heating member 2. When the temperature of the heating member 2 is lower than 53°C, the comparator 5 outputs a control signal to the switch component 7 based on a received voltage signal, and the switch component 7 turns on the heating member 2.

As shown in FIG. 2, in a possible implementation, the first temperature measurement apparatus 41 includes a first measurement apparatus 411 and a second measurement apparatus 412. Both the first measurement apparatus 411 and the second measurement apparatus 412 are configured to detect the temperature of the heating member 2. The first measurement apparatus 411 can transfer a voltage signal to the comparator 5, and the second measurement apparatus 412 can transfer a voltage signal to the controller 3. A standard resistor 8, namely, a fixed resistor, is disposed at another end of the comparator 5, and a voltage signal of the standard resistor 8 may be used as a standard value. For example, the first measurement apparatus 411 has a negative temperature coefficient thermistor. In an operating process of the heating member 2, when a voltage signal of the first measurement apparatus 411 is higher than the voltage signal of the standard resistor 8, the comparator 5 outputs a corresponding turn-on signal, so that the switch component 7 turns on the heating member 2; or when the voltage signal of the first measurement apparatus 411 is lower than the voltage signal of the standard resistor 8, the comparator 5 outputs a corresponding turn-off signal, so that the switch component 7 turns off the heating member 2.

When the comparator 5 has a hysteresis range, the voltage of the first measurement apparatus 411 is limited within a specific range due to impact of the hysteresis circuit. Consequently, detection precision of the first measurement apparatus 411 is declined, and control precision of the controller 3 for the heating member 2 is compromised. Therefore, in the solution in which the comparator 5 provided in this embodiment of this application has the hysteresis range, the first temperature measurement apparatus 41 includes the first measurement apparatus 411 and the second measurement apparatus 412. This is used to improve the control precision of the controller 3 for the heating member 2.

In a possible implementation, the battery component may include two switch components 7 connected in series. The comparator 5 and the controller 3 each control one switch component 7. When both the two switch components 7 are turned on, a control circuit of the heating member 2 is connected, and the heating member 2 can be turned on. When any switch is turned off, the control circuit of the heating member 2 is disconnected, and the heating member 2 is turned off.

The first measurement apparatus 411 and the second measurement apparatus 412 are mainly configured to collect the temperature of the heating member 2. Specifically, in a possible implementation, the first measurement apparatus 411 and the second measurement apparatus 412 may be disposed on the heating coil of the heating member 2, namely, the snake-shaped circuit 22. Generally, a position of the heating coil is a position at which the heating member 2 has a high temperature. Detection on the position can facilitate control on the heating member 2, to help improve safety.

In a possible implementation, the voltage signal may be transferred to both the controller 3 and the comparator 5 through the first measurement apparatus 411. In other words, the first temperature measurement apparatus 41 includes one measurement apparatus.

In a possible implementation, the first temperature measurement apparatus 41 may include three or more measurement apparatuses, the measurement apparatuses may be spaced from each other on the heating member 2, and voltage signals of the measurement apparatuses indicate temperature information at different positions of the heating member 2, to further improve control precision of the controller 3 for the heating member 2. This reduces a possibility that a local temperature of the heating member 2 is excessively high, to improve safety of the battery component.

The first measurement apparatus 411 and the second measurement apparatus 412 each include a thermistor. The first measurement apparatus 411 includes a first thermistor, and the second measurement apparatus 412 includes a second thermistor. The voltage of the first measurement apparatus 411 is mainly used to compare with the voltage of the standard resistor 8. The voltage of the first thermistor is compared with the voltage of the fixed resistor, to determine whether the temperature of the heating member 2 exceeds the preset temperature. A voltage signal of the second thermistor is mainly used to report to the controller 3, so that the controller 3 can learn of the temperature of the heating member 2 based on a voltage of the second thermistor. In this way, the controller 3 can control start and stop of the heating member 2 by utilizing a software program.

In the solution provided in this embodiment of this application, the two thermistors are disposed to separately detect the temperature of the heating member 2, and separately transmit corresponding voltage signals to the comparator 5 and the controller 3, to perform more accurate control.

As shown in FIG. 2, the battery component provided in this embodiment of this application further includes an AND gate 6. An output end of the comparator 5 can output a comparison result to the controller 3 and the AND gate 6, and an output end of the controller 3 can output a control result of the heating member 2 to the AND gate 6. The result output by the comparator 5 is a magnitude relationship between the voltage signal of the first measurement apparatus 411 and the preset value, and the result output by the controller 3 may be whether the heating member 2 needs to be turned on. The comparator 5 and the controller 3 each may output a low level and a high level. The low level is 0, and the high level is 1. Because the first measurement apparatus 411 is a negative temperature coefficient sensor, when the voltage signal of the first measurement apparatus 411 is not lower than the preset voltage value, that is, the temperature of the heating member 2 does not exceed the preset range, the comparator outputs 1; or when the voltage signal of the first measurement apparatus 411 is lower than the preset voltage value, that is, the temperature of the heating member 2 exceeds the preset range, the comparator outputs 0. When the controller 3 determines that the heating member 2 needs to be turned on, 1 is output; or when the controller 3 determines that the heating member 2 does not need to be turned on, 0 is output. The AND gate 6 is configured to receive signals transmitted by the comparator 5 and the controller 3, and can control the switch component 7, to further control start and stop of the heating member 2 by utilizing the switch component 7. When all signals received by the AND gate 6 are 1 (high level), the AND gate 6 controls the switch component 7 to turn on the heating member 2. When any signal received by the AND gate 6 is 0 (low level), the AND gate 6 controls the switch component to turn off the heating member 2.

Such a design can improve stability of controlling the heating member 2 by the battery component, to help reduce safety risks.

As shown in FIG. 2, the controller 3 can receive a voltage signal of the second measurement apparatus 412, a voltage signal of the second temperature measurement apparatus 42, and a comparison result of the comparator 5. The voltage signal of the second temperature measurement apparatus 42 is used to feed back actual temperature information of the battery 1, to help the controller 3 perform a logical operation. The comparison result of the comparator 5 may also be collected by the controller 3 to use as a determining basis of an output result of the controller 3. When an output result of the comparator 5 is 0, the output result of the controller 3 should also be 0. When the output result of the comparator 5 is 1, the controller 3 integrates another parameter, and outputs 1 or 0 as required.

The controller 3 can make corresponding determining in time by receiving the result of the comparator 5, so that turning off is performed in time when the temperature of the heating member 2 is excessively high, to reduce power consumption. If the comparator 5 does not transfer the comparison result to the controller 3, during use, there is a possibility that the temperature of the heating member 2 exceeds the preset temperature, and the controller 3 continues to continuously output a heating instruction. Consequently, control instruction disorder likely occurs, causing security risks.

Safety of the battery component can be improved by utilizing a circuit of the AND gate 6 to control the switch component 7. The battery 1 can be heated only when both the temperature of the battery 1 and the temperature of the heating member 2 are in an appropriate state, to reduce a possibility in which the heating member 2 continuously operates when the temperature of the battery 1 exceeds the preset range, or a possibility in which the temperature of the battery 1 does not reach the preset range when the temperature of the heating member 2 exceeds the preset range. Generally, the battery 1 needs to be heated when the temperature is below 0°C, and needs to be stopped when the temperature is above 60°C. Alternatively, a corresponding temperature range may be adjusted as required. For example, when the battery 1 is discharged at a current of 4 A, the battery 1 needs to be heated when the temperature of the battery 1 is below 25°C, and the battery 1 may be stopped heating when the temperature of the battery 1 is above 30°C.

When the controller 3 is faulty and mistakenly considers that the battery 1 needs to be continuously heated and the temperature of the heating member 2 needs to be continuously increased, the comparator 5 may be used to learn whether the temperature of the heating member 2 exceeds the preset temperature range, so that when the controller 3 fails or is faulty, the AND gate 6 can be used to turn off the heating member 2 in time, to help reduce safety risks of the battery component, and better meet an actual use requirement.

In a possible implementation, the battery component may include at least two heating members 2, and the heating members 2 may be located on different surfaces of the battery 1.

A plurality of heating members 2 are disposed, so that different positions on the battery 1 can be heated simultaneously. When the battery component includes two heating members 2, the two heating members 2 may be respectively located on two opposite sides of the battery 1. When the battery component has more than two heating members 2, positions of the heating members 2 may be distributed as required, so that all positions on the battery 1 can be evenly heated when the heating members 2 heat the battery 1, to improve heating efficiency.

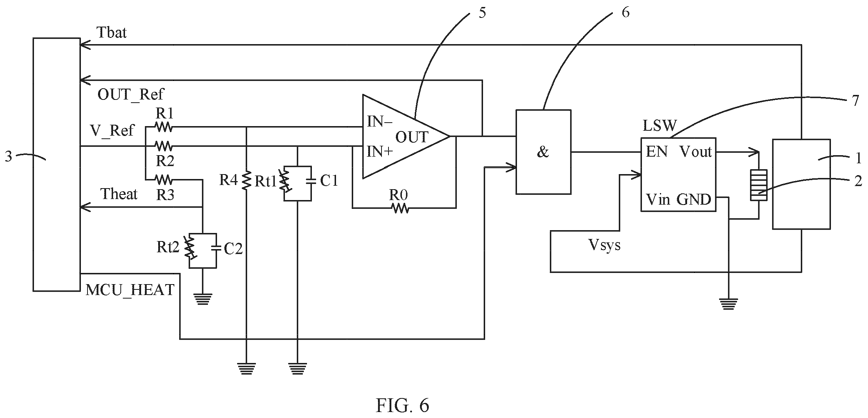

In a possible implementation, a circuit topology diagram of the battery component is shown in FIG. 6. V_ref is a stable level output by the controller 3, and is used as a total voltage for voltage division. Both R1 and R4 are fixed resistors, a branch in which R1 and R4 are located is equivalent to a branch in which the fixed resistors are located, and Rt1 and Rt2 are thermistors located on the heating member 2. A resistance value of the thermistor may vary with a temperature. Resistance value information of the thermistor may be indicated by detecting a voltage of the thermistor, and the resistance value information of the thermistor may indicate corresponding temperature information. A branch of R2 and Rt1 is equivalent to a branch on which the first measurement apparatus 411 is located, and a branch on which R3 and Rt2 are located is a branch on which the second measurement apparatus 412 is located. A branch circuit on which R1 is located, a branch on which R2 is located, and a branch circuit on which R3 is located are all connected in parallel to the controller 3, the controller 3 can output a stable level V_ref, and divided voltages of the three branch circuits on which R1, R2, and R3 are located are all V_ref. R4 is connected in parallel to an end IN- of the comparator 5, and both R4 and the end IN- of the comparator 5 are connected in series to R1. Rt1 is connected in parallel to an end IN+ of the comparator 5, and both Rt1 and the end IN+ of the comparator 5 are connected in series to R2. Rt1 and C1 are configured to form the first measurement apparatus 411, and Rt2 and C2 are configured to form the second measurement apparatus 412. During detection, resistance values of Rt1 and Rt2 change accordingly with the temperature change of the heating member 2. Because the branch circuit on which R1 and R4 are located is connected in parallel with the branch circuit on which R2 and Rt1 are located, divided voltages of the two branch circuits are the same, and both are V_ref. When a resistance value of Rt1 changes with the temperature of the heating member 2, a voltage of Rt1 also changes. Therefore, a voltage at the end IN+ of the comparator 5 changes. Because R4 is a fixed resistor, a voltage at the end IN- of the comparator 5 is a fixed value. The voltages at the end IN- and the end IN+ are compared, so that the output end of the comparator 5 may be used to determine a value relationship between R4 and Rt1, that is, a relationship between resistance values of R4 and Rt1 can be indicated by utilizing the relationship between the voltages, and a resistance value relationship between R4 and Rt1 can indicate a relationship between a current temperature of the heating member 2 and the preset temperature, to perform determining. T1 is a voltage of the second measurement apparatus 412. A divided voltage of Rt2 may indicate a resistance value of the second measurement apparatus 412, and the resistance value indicates the current temperature of the heating member 2. When the resistance value of Rt2 changes with the temperature of the heating member 2, the divided voltage of Rt2 also changes accordingly, so that the voltage of T1 changes, and the controller 3 can make corresponding determining based on T1. T1 can indicate current resistance information of Rt2, and further, the current temperature of the heating member 2 can be indicated based on the resistance information of Rt2. Therefore, determining performed by the controller 3 based on T1 can be equivalent to determining performed based on the temperature of the heating member 2. A fixed resistor R0 may be used as a hysteresis resistor of the comparator 5, so that the comparator 5 has a hysteresis range.

In the circuit provided in this embodiment of this application, resistance values of R1, R2, and R3 are the same. When R1, R2, and R3 are not disposed, R4 is directly connected in parallel to Rt1, voltages of R4 and Rt1 are the same, and are both V_ref. In addition, regardless of how Rt1 changes, a voltage of a branch on which Rt1 is located is V_ref, and because Rt1 and IN+ are connected in parallel, the voltage at IN+ is also the same as that of Rt1, that is, inputs at IN- and IN+ are always the same. Therefore, comparison cannot be performed. Fixed resistors R1 and R2 with a same resistance value are disposed. When resistance values of R4 and Rt1 are the same, a divided voltage of R4 and a divided voltage of Rt1 are the same. When a resistance value of Rt1 is greater than that of R4, a divided voltage of R2 is lower than the divided voltage of R1, and the divided voltage of Rt1 is higher than the divided voltage of R4. When the resistance value of Rt1 is less than that of R4, the divided voltage of R2 is higher than the divided voltage of R1, and the divided voltage of Rt1 is lower than the divided voltage of R4. Therefore, a voltage signal input at IN+ of the comparator 5 varies with the resistance value of Rt1, so that comparison can be performed to indicate a relationship between the current temperature of the heating member 2 and the preset temperature. This helps control the heating member 2.

Likewise, if the fixed resistor R3 is not disposed, the divided voltage is always V_ref regardless of how the resistance value of Rt2 changes. Therefore, T1 is also V_ref, that is, the voltage signal of the second measurement apparatus 412 does not change, and in this case, the voltage signal of Rt2 cannot indicate the current temperature status of the heating member 2. After the fixed resistor R3 is disposed, a total voltage of a branch on which R3 and Rt2 are located is V_ref, R3 and Rt2 are connected in series, and when a resistance of Rt2 varies with the temperature of the heating member 2, the resistance value of Rt2 increases, accordingly, a divided voltage of R3 decreases, and the divided voltage of Rt2 increases, that is, T1 increases; or the resistance value of Rt2 decreases, accordingly, the divided voltage of R3 increases, and the divided voltage of Rt2 decreases, that is, T1 decreases. Therefore, receiving T1 by the controller 3 is equivalent to receiving the current resistance information of Rt2, and is further equivalent to receiving the current temperature of the heating member 2.

The comparator 5 is configured to compare values at IN- and IN+. A negative coefficient thermistor is selected for Rt1 and Rt2, that is, a resistance value of the thermistor is inversely proportional to a temperature of the thermistor. When the value at IN+ is less than the value at IN-, the comparator 5 outputs 0, that is, the voltage of Rt1 is lower than the voltage of R4, and the resistance value of Rt1 is less than the resistance value of R4. Therefore, it may be learned that the temperature of Rt1 is higher than the preset temperature range, and the heating member 2 needs to be turned off. In this case, an output end voltage OUT_ref of the comparator 5 is also 0, and OUT_ref is fed back to the controller 3 and the AND gate 6 as a result of the comparator 5. When the value at IN+ is not lower than the value at IN-, the comparator 5 outputs 1, that is, the voltage of Rt1 is not lower than the voltage of R4, and the resistance value of Rt1 is greater than the resistance value of R4. Therefore, it may be learned that the temperature of Rt1 is lower than the preset temperature range, and the heating member 2 may operate. In this case, the output end voltage OUT_ref of the comparator 5, namely, an output result, is also 1, and OUT_ref is fed back to the controller 3 and the AND gate 6 as the result of the comparator 5.

The controller 3 can receive the voltage signal T1 of the second measurement apparatus 412 and a voltage signal T2 of the second temperature measurement apparatus 42, where TI indicates the temperature information of the heating member 2, and T2 indicates current temperature information of the battery 1. The controller 3 then determines, with reference to the output information OUT _ref of the comparator 5, whether the battery 1 needs to be heated. When the controller 3 determines that the battery 1 needs to be heated, an output result MCU_ref is 1. When the controller 3 determines that the battery 1 does not need to be heated, the output result MCU _ref is 0. The output result of the controller 3 can be output to the AND gate 6, and the AND gate 6 performs determining based on the results of the controller 3 and the comparator 5. When the output results of the controller 3 and the comparator 5 are both 1, an output result of the AND gate 6 is also 1, and the switch component 7 controls the heating member 2 to start; or when an output result of either of the output results of the controller 3 and the comparator 5 is 0, the output result of the AND gate 6 is 0, and the switch component 7 controls the heating member 2 to be in an off state.

According to such a design, stability and safety of controlling the heating member 2 can be improved. The heating member 2 can be started only when a condition of the heating member 2 and a condition of the battery 1 both meet heating conditions, so that security risks caused by exceeding the preset range due to continuous increasing of a temperature of either the heating member 2 or the battery 1 can be reduced, and this better meets an actual use requirement.

It should be noted herein that Rt1 and Rt2 may alternatively be a positive coefficient thermistor. During use, higher temperatures of Rt1 and Rt2 indicate greater resistances. Similarly, the temperature of the heating member 2 and whether heating needs to be stopped may be determined based on resistance value changes of Rt1 and Rt2 and a value relationship between the fixed resistor and the resistance values of Rt1 and Rt2.

An output end of the AND gate 6 can output a result to the switch component 7. The switch component 7 may be a load switch (load switch, LSW). An output end of the load switch is configured to control start and stop of the heating member 2. The load switch may be powered by the battery 1. Vsys indicates a system voltage.

The first measurement apparatus 411, the second measurement apparatus 412, the fixed resistor R4, and the load switch are separately grounded, to improve circuit safety.

An embodiment of this application further provides an electronic device. The electronic device may be a device like a mobile phone, a tablet computer, or a notebook computer, or may be a wearable device like a smart watch. The electronic device includes the battery component in any one of the foregoing embodiments. Because the battery component has the foregoing technical effects, the electronic device also has corresponding technical effects. Details are not described herein again. In addition, both heating logic of the battery 1 and low-temperature charging logic of the battery 1 that are described in the foregoing embodiments can be applied to the electronic device, to control the battery component of the electronic device.

In a possible implementation, the electronic device further includes a third temperature measurement apparatus. The third temperature measurement apparatus may be disposed at a housing of the electronic device, for example, a position like a bottom housing of a smart watch, and is configured to detect a temperature of the housing of the electronic device. The third temperature measurement apparatus may use a negative temperature coefficient (negative temperature coefficient, NTC) sensor. The third temperature measurement apparatus is disposed, so that the controller 3 can receive a signal indicating temperature information of the housing of the electronic device, and when the temperature exceeds a temperature range of a human comfort range, the battery component is controlled to stop heating. In this manner, a possibility in which a temperature of the electronic device is excessively high due to heating the battery 1, compromising comfort of a user can be reduced, and dangers caused by the excessively high temperature can also be reduced. This helps improve safety of the electronic device, and better meets an actual use requirement.

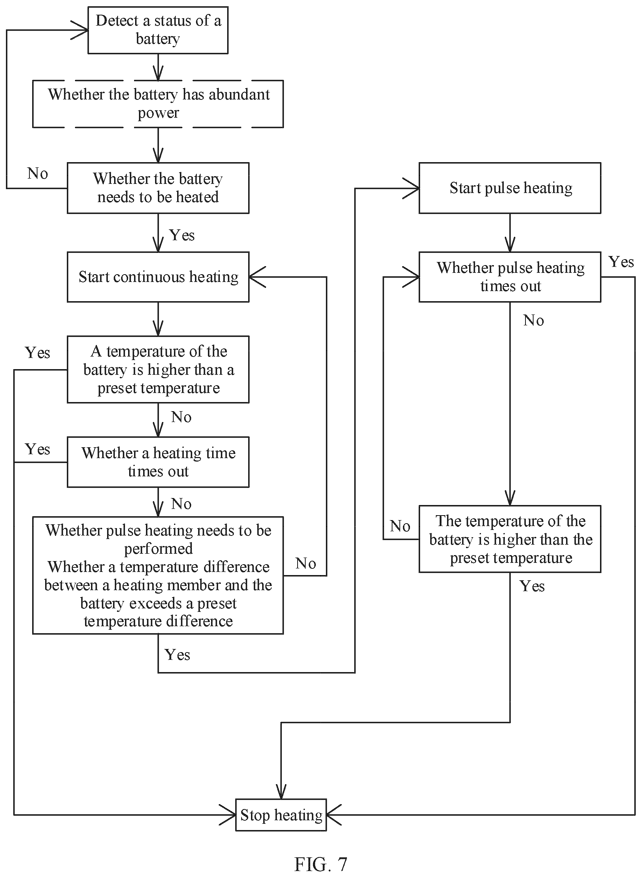

As shown in FIG. 7, an embodiment of this application further provides a control method for an electronic device, that is, discharging temperature control logic of a battery 1. A controller 3 starts to detect a status of the battery 1, to determine whether the battery 1 needs to be heated. The detected status includes but is not limited to a temperature of the battery 1. The temperature status of the battery 1 may be detected through a second temperature measurement apparatus 42. If the controller 3 determines that the battery 1 needs to be heated, heating is started. If the controller 3 determines that the battery 1 does not need to be heated, a status of a battery component is re-detected. Whether the battery 1 needs to be heated may be determined based on whether a current temperature of the battery 1 is lower than a preset temperature. The preset temperature may be set based on a discharge status of the battery. For example, the battery 1 is discharged at a current of 4 A, when the temperature of the battery 1 is below 25°C, it is considered that the battery 1 needs to be heated. When the battery 1 needs to be heated, a continuous heating phase is first started. In the continuous heating phase, a heating member 2 continuously heats the battery 1. When the temperature of the battery 1 reaches the preset temperature, heating is stopped. When the temperature of the battery 1 does not reach the preset temperature, it is determined whether continuous heating exceeds a preset time t1. When continuous heating times out, it indicates that the battery 1 cannot be heated to the preset temperature, and continuing heating may increase consumption. Therefore, heating is stopped. When continuous heating does not time out, it is determined whether pulse heating needs to be performed. Whether pulse heating needs to be performed may be determined by determining whether a temperature difference between the heating member 2 and the battery 1 exceeds a preset value. Pulse heating means that the heating member 2 intermittently heats the battery 1, that is, suspends heating for a specific time period after a specified heating time period, and continues heating after the suspension ends. In practice, heating and suspension each may be performed per second. To be specific, the heating member 2 heats the battery 1 for one second, then pauses for one second, then heats the battery 1 for one second, and then pauses for one second, to perform circulation. The heating member 2 is controlled based on heating time, to reduce a possibility that the battery 1 is heated for a long time because the temperature of the battery component cannot reach the preset temperature, so that consumption can be reduced and safety can be improved. A purpose of pulse heating is to reduce a possibility that the temperature difference between the heating member 2 and the battery 1 is excessively large. Because heat transfer efficiency of the battery 1 is low, in a heating process, a temperature in an area that is of the battery 1 and that is close to the heating member 2 rises quickly, and a temperature in an area that is of the battery 1 and that is away from the heating member 2 rises slowly, likely causing a temperature difference. Because a first temperature measurement apparatus 41 is disposed on the heating member 2, and a second temperature measurement apparatus 42 is disposed on a protection board, when a temperature difference between the heating member 2 and the protection board is excessively large, the battery 1 is prone to uneven heating, resulting in a high temperature on a partial area. In the pulse heating manner, the heating process may include suspension, to slow down temperature rise efficiency of the area that is of the battery 1 and that is close to the heating member 2. In the suspension, heat may be propagated to the area that is of the battery 1 and that is away from the heating member 2, so that a possibility of uneven heating the battery 1 can be reduced in the heating process. When it is determined whether pulse heating needs to be performed, a threshold may be preset. The threshold may be a single value, or may be a range. In practice, it may be set, as required, that when the temperature difference between the battery 1 and the heating member 2 is greater than 10°C, 15°C, 20°C, or 25°C, pulse heating is started. When the temperature difference between the battery 1 and the heating member 2 is greater than the threshold, pulse heating needs to be performed. When the temperature difference between the battery 1 and the heating member 2 does not exceed the threshold and continuous heating does not time out, pulse heating does not need to be performed, and continuous heating continues to be performed. If continuous heating times out, heating is stopped. When pulse heating is performed, whether pulse heating exceeds a preset time t2 is also determined, and when duration of pulse heating exceeds the preset time t2, heating is stopped. When the duration of pulse heating does not exceed the preset time t2, whether the battery 1 reaches a target temperature is determined. When the temperature of the battery 1 does not reach the target temperature, pulse heating continues to be performed. When the temperature of the battery 1 reaches the target temperature, heating is stopped. The battery component starts continuous heating or pulse heating as required, so that control logic of the heating member 2 can be more proper, consumption can be reduced while a use requirement is met, and safety can be improved.

A step indicated by a dashed-line box in FIG. 7 is an optional step. Whether the battery 1 has abundant power may be determined, that is, whether the battery 1 needs to be charged is determined. When a percentage of a remaining state of charge of the battery 1 is less than K, it is considered that the battery 1 needs to be charged, and a user is indicated that the battery 1 needs to be charged; or when the percentage of the remaining state of charge of the battery 1 is greater than or equal to K, there may be no need to indicate the user that the battery 1 needs to be charged. A specific value of K may be set as required, and may be 15%, 20%, 25%, 30%, or the like.

Parameters such as a current of continuous heating and a current of pulse heating may be the same.

Based on the foregoing temperature control logic, the battery 1 can be maintained in an appropriate temperature range, to help ensure stable performance of the battery, so that the battery 1 can discharge at a high current in a low-temperature environment. After the battery 1 is heated, optionally, the controller 3 may also read related signals indicating the temperature and the remaining state of charge (state of charge, SOC) of the state of charge of the battery 1, so that a maximum discharge capability that can be output by the battery 1 can be determined based on a capability of the battery 1. This helps reduce a possibility that a system hangs up because an external load requirement exceeds the discharge capability of the battery 1. The maximum discharge capability of the battery 1 may be determined based on that a voltage at an output end of the battery 1 is not lower than y when the battery 1 is discharged at a current of x. In a possible implementation, an output current of the battery 1 is 3 A, and the voltage at the output end of the battery 1 is not lower than 3 V.

Timing is performed on a continuous heating process and a pulse heating process, to help reduce a possibility in which when the temperature of the battery 1 has reached or exceeded a preset upper temperature limit due to a delay caused by a control system, the heating member 2 still heats the battery 1. This helps improve safety of the battery component, and better meets an actual use requirement.

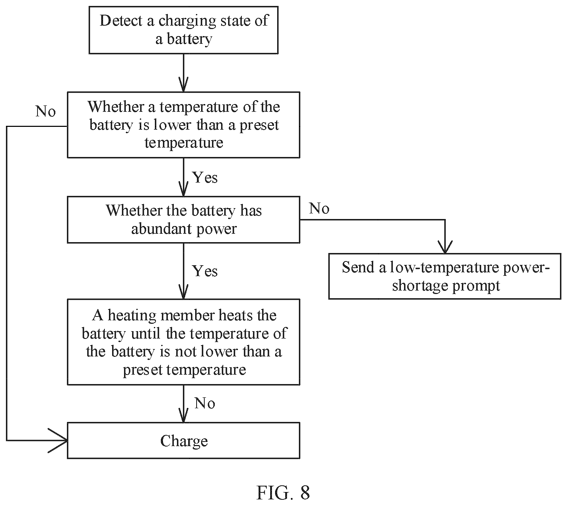

As shown in FIG. 8, an embodiment of this application further provides a charging method for an electronic device, so that a temperature of a battery 1 can be increased to a proper temperature range before charging, to reduce a possibility of lithium plating. First, a charging status of a battery component is detected. Specifically, the charging status may be determined based on whether the electronic device is connected to a charger. A sensor may be added to a charging port of the electronic device, to detect whether there is a charger connected to the electronic device. When the electronic device is connected to a charger, it is considered that the electronic device is in a charging state. When the electronic device is not connected to a charger, it is considered that the electronic device is not in a charging state. A status of the battery 1 is determined through the controller 3, and information read by the controller 3 during determining includes but is not limited to a temperature, a state of charge, and the like of the battery 1. The controller 3 determines whether a temperature of the battery 1 is lower than a preset temperature. For a lithium battery, a preset temperature is usually 0°C. When a temperature of the lithium battery is lower than 0°C, it may be considered that the lithium battery is in a low-temperature state. When the temperature of the lithium battery is not lower than 0°C, it may be considered that the lithium battery is not in a low-temperature state. When the temperature of the battery 1 is not lower than the preset temperature, the battery 1 is not in a low-temperature state, and the battery 1 can be directly charged. When the temperature of the battery 1 is lower than the preset temperature, that is, when the battery 1 is in a low-temperature state, whether the state of charge of the battery 1 meets a first condition is determined. The first condition is whether the state of charge of the battery 1 can be used to start a heating member 2. Whether the battery 1 can start the heating member 2 may be determined based on a percentage of a remaining state of charge. When the percentage of the remaining state of charge is less than Q, the remaining state of charge of the battery 1 is not enough to supply power to the heating member 2. In this case, the electronic device may emit an image signal, a sound signal, a vibration signal, or the like, to indicate that the battery component of the electronic device is currently in a low-temperature power-shortage state. If charging is performed in this case, the battery may be damaged. A user may increase the temperature of the battery 1 in a manner of heating by the external component or the like, and then charge the battery 1. When the percentage of the remaining state of charge is not less than Q, the remaining state of charge of the battery 1 can supply power to the heating member 2, to start heating, so as to heat the battery 1 through the heating member 2. A specific value of Q may be set as required, and may be 5%, 7%, 9%, 10%, or the like. In a process of heating the battery 1 by the heating member 2, whether the temperature of the battery 1 is lower than the preset temperature is determined. When the temperature of the battery 1 is lower than the preset temperature, the battery 1 is not charged, and the heating member 2 continues to heat the battery 1. When the temperature of the battery 1 is not lower than the preset temperature, the battery 1 is charged. The preset temperature herein may be the same as a temperature for determining whether the battery is in a low-temperature state. Generally, the battery 1 can be charged when the temperature of the battery 1 is not lower than 0°C.

In a possible implementation, after the heating member 2 heats the battery 1 for fixed duration, the battery 1 may be charged.

A low-temperature charging process is as follows: The battery 1 first heats up the battery 1 by utilizing heat generated when the battery 1 operates and the heating member 2, and the battery 1 is charged after the temperature of the battery 1 reaches the preset temperature, to reduce a possibility of lithium plating occurring when the battery 1 is charged at a low temperature. This helps prolong a service life of the battery 1. Logic of low-temperature charging is the same as that of high-current discharging. An only difference is that relative thresholds in heating logic are different. A low-temperature charging method may be performed after the user connects the battery component or an electronic device having the battery component to the charger.

According to the battery component provided in this embodiment of this application, the heating member 2 is attached to a surface of the battery 1, and the battery supplies power to the heating member 2. The battery 1 is heated by utilizing heat generated by discharging of the battery and heat generated by the heating member 2, so that the temperature of the battery 1 can be increased, an internal resistance of the battery 1 is reduced, and an electrochemical substance activity is improved. This facilitates high-current discharging of the battery 1 in a low-temperature environment. The heating member 2 is disposed to make the battery 1 be in an appropriate temperature environment, so that performance of both charging and discharging of the battery 1 can be improved. A low-temperature charging solution and a low-temperature discharging solution are combined, to implement efficient charging of the battery in a low-temperature state, and also implement high-current discharging in the low-temperature environment. This helps improve comprehensive performance in a low temperature state.

Generally, for high-current discharging, in an environment in which a temperature is lower than 5°C, a capability of the battery 1 is greatly compromised, and is not enough to support normal use. In other words, the environment in which the temperature is lower than 5°C is the low-temperature environment. For a lithium-ion battery, a capability of the battery 1 is greatly compromised usually below 0°C. In other words, an environment in which a temperature below 0°C is the low-temperature environment. Metal with a high impedance is printed on the flexible circuit board 21 to form the heating member 2, so that the heating member 2 has a small volume and a large winding. This better meets an actual use requirement. One or more thermistors are disposed on the heating member 2, so that the temperature of the heating member 2 can be monitored. This helps reduce a possibility in which a local temperature is excessively high. Therefore, in this embodiment of this application, a low-temperature environment for the lithium-ion battery is an environment in which a temperature is below 0°C.

Generally, when the lithium battery is charged below 0°C, lithium plating may occur in the battery 1, and a separator of the battery 1 is likely to be pierced. Consequently, the battery 1 is short-circuited, and there is a risk of thermal runaway. According to the solution provided in this embodiment of this application, the battery 1 in the low-temperature environment can be preheated, so that the temperature of the battery 1 can be within a proper range. In this way, the battery 1 can be charged in the low-temperature environment, and charging efficiency of the battery 1 can be improved.

According to the battery component provided in this embodiment of this application, an isolation layer 11 of a nanocrystalline material is disposed, so that eddy currents generated by the battery 1 and the heating member 2 in a wireless charging process can be reduced. This helps improve wireless charging efficiency.

According to the battery component provided in this embodiment of this application, a circuit is protected through software logic and hardware. To be specific, dual protection of software and hardware including the controller 3, the comparator 5, and the thermistor is used, so that the temperature of the battery 1 can be within an appropriate temperature range, to implement dual protection for battery temperature control. On one hand, a possibility of thermal runaway caused by an excessively high temperature of the battery 1 can be reduced, and on the other hand, a risk of scalding of a user can be reduced by utilizing the third temperature measurement apparatus.

Based on temperature control logic and status determining of the battery 1 provided in this embodiment of this application, the status of the battery 1 can be determined, so that the battery 1 can be discharged or charged based on the status of the battery 1, and different temperature control solutions are used based on different requirements of the battery 1, to implement low-temperature discharging and low-temperature charging. In addition, adjustment can be performed based on statuses of the battery 1 and the heating member 2, to help implement temperature control protection in a charging/discharging process and improve charging/discharging efficiency.

The foregoing descriptions are merely specific implementations of embodiments of this application, but are not intended to limit the protection scope of embodiments of this application. Any variation or replacement within the technical scope disclosed in embodiments of this application shall fall within the protection scope of embodiments of this application. Therefore, the protection scope of embodiments of this application shall be subject to the protection scope of the claims.

## Claims

1. A battery component, wherein the battery component comprises:
a battery (1);
a heating member (2), wherein the heating member (2) covers at least a part of the battery (1), and the heating member (2) is electrically connected to the battery (1); and
a temperature measurement apparatus (4), wherein the temperature measurement apparatus (4) comprises a first temperature measurement apparatus (41) and a second temperature measurement apparatus (42), the first temperature measurement apparatus (41) is configured to detect a temperature of the heating member (2), and the second temperature measurement apparatus (42) is configured to detect a temperature of the battery (1); and
when the second temperature measurement apparatus (42) detects that the temperature of the battery (1) is lower than a preset temperature, a continuous heating mode is enabled, and when the first temperature measurement apparatus (41) and the second temperature measurement apparatus (42) detect that a temperature difference between the heating member (2) and the battery (1) exceeds a preset temperature difference, the heating member (2) enables a pulse heating mode.

2. The battery component according to claim 1, wherein the heating member (2) comprises a substrate and a heating coil, and the heating coil is disposed on the substrate.

3. The battery component according to claim 2, wherein the heating coil comprises at least one bent portion.

4. The battery component according to claim 2, wherein a material of the substrate is polyimide, and a material of the heating coil is copper-nickel alloy.

5. The battery component according to any one of claims 1 to 4, wherein the heating member (2) is a flexible circuit board (21).

6. The battery component according to any one of claims 1 to 5, wherein the battery component comprises a controller (3), and the controller (3) is configured to: receive a detection result of the temperature measurement apparatus (4), and control the heating member (3) based on the detection result of the temperature measurement apparatus (4).

7. The battery component according to any one of claims 1 to 6, wherein the battery component further comprises a comparator (5), and the comparator (5) is configured to: receive a detection result of the first temperature measurement apparatus (41), and compare the detection result with a preset value.

8. The battery component according to claim 7, wherein the comparator (5) has a hysteresis range, the first temperature measurement apparatus (41) comprises at least a first measurement apparatus (411) and a second measurement apparatus (412), the comparator (5) is configured to receive a detection result of the first measurement apparatus (411), and the controller (3) is configured to receive a detection result of the second measurement apparatus (412).

9. The battery component according to claim 7, wherein the battery component further comprises an AND gate (6) and a switch component (7), and the AND gate (6) is configured to: receive signals output by the controller (3) and the comparator (5), and control the switch component (7) to turn on or turn off the heating member (2).

10. The battery component according to any one of claims 1 to 9, wherein the battery (1) has a protection board, and the second temperature measurement apparatus (42) is disposed on the protection board.

11. The battery component according to any one of claims 1 to 10, wherein the battery component further comprises an isolation layer (11), and the isolation layer (11) is located on a side that is of the heating member (2) and that is away from the battery (1).

12. The battery component according to claim 11, wherein a material of the isolation layer (11) is a nanocrystalline material.

13. The battery component according to any one of claims 1 to 12, wherein the battery component comprises at least two heating members (2), and the heating members (2) are located on different surfaces of the battery (1).

14. An electronic device, wherein the electronic device comprises:
a battery (1);
a heating member (2), wherein the heating member (2) covers at least a part of the battery (1), and the heating member (2) is electrically connected to the battery (1); and
a temperature measurement apparatus (4), wherein the temperature measurement apparatus (4) comprises a first temperature measurement apparatus (41) and a second temperature measurement apparatus (42), the first temperature measurement apparatus (41) is configured to detect a temperature of the heating member (2), and the second temperature measurement apparatus (42) is configured to detect a temperature of the battery (1);
a controller (3), wherein the controller (3) is configured to receive at least a detection result of the second detection apparatus (42);
a comparator (5), wherein the comparator (3) is configured to: receive a detection result of the first temperature measurement apparatus (41), and compare the detection result with a preset value;
a switch component (7), wherein the switch component (7) is configured to control the heating member (2) to be turned on or turned off; and
an AND gate (6), wherein the AND gate (6) is configured to: receive detection results of the controller (3) and the comparator (5), and control the switch component (7), wherein
the controller (3) is configured to output a control signal based on the detection result of the second measurement apparatus (42), the comparator (3) is configured to output a control signal based on the detection result of the first measurement apparatus (41), and when both the controller (3) and the comparator (5) output signals for turning on the switch component (7), the AND gate (6) is configured to control the switch component (7) to be turned on, or when either of the controller (3) and the comparator (5) outputs a signal for turning off the switch component (7), the AND gate (6) is configured to control the switch component (7) to be turned off.

15. The electronic device according to claim 14, wherein the heating member (2) is a flexible circuit board.

16. The electronic device according to claim 14 or 15, wherein the comparator (5) has a hysteresis range, the first temperature measurement apparatus (41) comprises at least a first measurement apparatus (411) and a second measurement apparatus (412), the comparator (5) is configured to receive a detection result of the first measurement apparatus (411), and the controller (3) is configured to receive a detection result of the second measurement apparatus (412).

17. The electronic device according to any one of claims 14 to 16, wherein the electronic device comprises at least two heating members (2), and the heating members (2) are located on different surfaces of the battery (1).

18. The electronic device according to any one of claims 14 to 17, wherein the electronic device comprises a third temperature measurement apparatus, and the third temperature measurement apparatus is disposed on a housing of the electronic device and is configured to detect a temperature of the housing.

19. A control method for an electronic device, wherein the electronic device comprises a controller (3), a battery (1), a heating member (2), a first temperature measurement apparatus (41), a second temperature measurement apparatus (42), a comparator (5), and an AND gate (6); and the control method comprises:
detecting, by the controller (3), temperature information of the battery (1) through the second temperature measurement apparatus (42); and when the battery (1) needs to be heated, outputting, by the controller (3), a signal for turning on the heating member (2), or when the battery (1) does not need to be heated, outputting, by the controller (3), a signal for turning off the heating member (2);
detecting, by the comparator (5), temperature information of the heating member (2) through the first temperature measurement apparatus (42); and when a temperature of the heating member (2) is higher than a preset value, outputting, by the comparator (5), a signal for turning off the heating member (2), or when the temperature of the heating member (2) is not higher than the preset value, outputting, by the comparator (5), a signal for turning on the heating member (2); and
receiving, by the AND gate (6), signals output by the controller (3) and the comparator (5), and when both the controller (3) and the comparator (5) output signals for turning on the heating member (2), controlling, by the AND gate (6), the heating member (2) to be turned on, or when either of the controller (3) and the comparator (5) outputs a signal for turning off the heating member (2), controlling, by the AND gate (6), the heating member (2) to be turned off.

20. The control method for an electronic device according to claim 19, wherein the control method comprises:
detecting, by the controller (3), a status of the battery (1) and determining whether the battery (1) needs to be heated;
when the battery (1) does not need to be heated, continuing to detect the status of the battery (1); or
when the battery (1) needs to be heated, enabling, by the heating member (2), a continuous heating mode, and determining whether a temperature of the battery (1) is higher than a preset temperature;
when the temperature of the battery (1) is higher than the preset temperature, stopping heating; or
when the temperature of the battery (1) is not higher than the preset temperature, determining whether the continuous heating mode times out;
when the continuous heating mode times out, stopping heating; or
when the continuous heating mode does not time out, determining whether a temperature difference between the heating member (2) and the battery (1) exceeds a preset temperature difference;
when the temperature difference between the heating member (2) and the battery (1) does not exceed the preset temperature difference, continuing the continuous heating mode; or
when the temperature difference between the heating member (2) and the battery (1) exceeds the preset temperature difference, enabling a pulse heating mode, and determining whether the pulse heating mode times out;
when the pulse heating mode times out, stopping heating; or
when the pulse heating mode does not time out, determining whether the temperature of the battery (1) is higher than the preset temperature; and
when the temperature of the battery (1) is higher than the preset temperature, stopping heating; or
when the temperature of the battery (1) is not higher than the preset temperature, re-determining whether pulse heating times out.

21. The control method for an electronic device according to claim 20, wherein the control method further comprises:
detecting, by the controller (3), whether the battery (1) needs to be charged.

22. A charging method for an electronic device, wherein the electronic device comprises a controller (3), a battery (1), the heating member (2), and a second temperature measurement apparatus (42); and the charging method comprises:
detecting, by the controller (3), a charging status of the electronic device;
when the electronic device is in a charging state, detecting, by the controller (3) through the second temperature measurement apparatus (42), whether a temperature of the battery (1) is lower than a preset temperature;
when the temperature of the battery (1) is lower than the preset temperature, detecting, by the controller (3), whether a state of charge of the battery meets a first condition; and
when the state of charge of the battery (1) meets the first condition, controlling the heating member (2) to heat the battery (1), and after the controller (3) determines that the temperature of the battery (1) reaches the preset temperature, controlling, by the controller (3), the electronic device to be charged.

23. The charging method for an electronic device according to claim 22, wherein when the electronic device is in a charging state, the step of detecting, by the controller (3) through the second temperature measurement apparatus (42), whether the temperature of the battery (1) is lower than the preset temperature comprises:
when the temperature of the battery (1) is not lower than the preset temperature, controlling, by the controller (3), the electronic device to be charged.

24. The charging method for an electronic device according to claim 22 or 23, wherein when the temperature of the battery (1) is lower than the preset temperature, the step of detecting, by the controller (3), whether the state of charge of the battery meets the first condition comprises:
when the state of charge of the battery (1) does not meet the first condition, sending, by the electronic device, a low-temperature power-shortage prompt.
